(19) Europäisches Patentamt
European Patent Office
Office européen des brevets

(11) **EP 4 787 558 A1**

(12) **EUROPEAN PATENT APPLICATION**
published in accordance with Art. 153(4) EPC

(43) Date of publication:
05.08.2026 Bulletin 2026/32

(21) Application number: 24883827.8

(22) Date of filing: 30.04.2024

(51) International Patent Classification (IPC):
*H01M 50/107* (2021.01)

(52) Cooperative Patent Classification (CPC):
H01M 10/00; H01M 50/107; H01M 50/317;
Y02E 60/10

(86) International application number:
PCT/CN2024/090905

(87) International publication number:
WO 2025/091813 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.10.2023 CN 202311421246

(71) Applicant: Contemporary Amperex Technology
Co., Limited
Ningde, Fujian 352100 (CN)

(72) Inventors:
• WU, Kai
Ningde, Fujian 352100 (CN)

• XU, Baoyun
Ningde, Fujian 352100 (CN)
• SUN, Jingxuan
Ningde, Fujian 352100 (CN)
• OUYANG, Shaocong
Ningde, Fujian 352100 (CN)
• CHEN, Jiahua
Ningde, Fujian 352100 (CN)
• YE, Yonghuang
Ningde, Fujian 352100 (CN)

(74) Representative: Lorenz Seidler Gossel Part. mbB
Widenmayerstr. 23
80538 München (DE)

(54) **BATTERY CELL, MANUFACTURING METHOD THEREFOR, BATTERY, AND ELECTRIC DEVICE**

(57) The present application relates to the technical field of batteries, and provides a battery cell, a manufacturing method therefor, a battery and an electrical apparatus. The battery cell comprises a battery core assembly and an outer package; the battery core assembly comprises a positive electrode sheet, an active material coating being provided on the positive electrode sheet, and the active material coating comprising a sodium-containing copper-based layered oxide; the outer package is used for packaging the battery core assembly. A ventilation member is provided in the outer package, the ventilation rate of the ventilation member being equal to or larger than the maximum required venting capacity of the battery cell in total cycle time per unit, and the maximum required venting capacity of the battery cell in the total cycle time per unit being obtained by converting the volume of carbon dioxide generated by cleavage of Cu-O bonds and oxygen release in the sodium-containing copper-based layered oxide. The battery cell of the present application uses the ventilation member to timely discharge the redundant gas generated by the cleavage of Cu-O bonds in the working process of the battery out of the battery cell, such that the problem of battery cell failure caused by valve opening of a pressure relief mechanism of the battery cell due to the internal gas pressure being too large and reaching a threshold value of the pressure relief mechanism is less likely to occur.

EP 4 787 558 A1

20

FIG. 3

**Description**

The present application claims priority to Chinese Patent Application No. 202311421246.1 entitled "BATTERY CELL, MANUFACTURING METHOD THEREFOR, BATTERY, AND ELECTRIC DEVICE" and filed with the China National Intellectual Property Administration on October 30, 2023, the content of which is incorporated herein by reference in its entirety.

TECHNICAL FIELD

The present application relates to the technical field of batteries, and in particular, to a battery cell, a manufacturing method therefor, a battery, and an electric device.

BACKGROUND

In the related art, a positive electrode active material in a battery may experience structural instability due to the influence of operating conditions during operation. The instability of the active material may, to a specific extent, cause the active material to release oxygen, leading to an increase in gas production inside the battery. When an internal gas pressure of the battery reaches a valve opening threshold of a pressure relief mechanism inside the battery, the pressure relief mechanism of the battery opens a valve and fails. Excessive gas pressure may even cause safety accidents such as an explosion, thereby compromising the safety of the battery. It can be seen that how to improve the safety of batteries is an urgent technical problem to be solved.

SUMMARY

An objective of embodiments of the present application is to provide a battery cell, a manufacturing method therefor, a battery, and an electric device, to solve the problem of poor battery safety in the related art.

TECHNICAL SOLUTION

The technical solutions adopted in embodiments of the present application are as follows:

In a first aspect, the embodiments of the present application provide a battery cell. The battery cell includes a battery cell assembly and an outer packaging. The battery cell assembly includes a positive electrode plate, an active material coating is provided on the positive electrode plate, and the active material coating includes a sodium-containing copper-based layered oxide. The outer packaging is configured to encapsulate the battery cell assembly, an air-permeable member is provided on the outer packaging, an air permeability of the air-permeable member is equal to or greater than a maximum required gas venting volume of the battery cell per unit of total cycle time, and the maximum required gas venting volume of the battery cell per unit of total cycle time is obtained by conversion based on a volume of carbon dioxide generated due to oxygen release caused by Cu-O bond breakage in the sodium-containing copper-based layered oxide.

During the operation of the battery cell, the sodium-containing copper-based layered oxide as a positive electrode material becomes structurally unstable under a high voltage, causing more active sites on the surface of the active material coating to be exposed to an electrolytic solution. Consequently, copper dissolves, the Cu-O bond breaks, and more oxygen is released, ultimately leading to an increase in gas production. In the technical solutions of the embodiments of the present application, the air-permeable member is provided on the outer packaging of the battery cell, and the air permeability of the selected air-permeable member is equal to or greater than the maximum required gas venting volume of the battery cell per unit of total cycle time. The maximum required gas venting volume of the battery cell per unit of total cycle time is obtained by conversion based on the volume of carbon dioxide generated due to oxygen release caused by Cu-O bond breakage in the sodium-containing copper-based layered oxide. By using the air-permeable member, the excess gas generated due to Cu-O bond breakage during the operation of the battery can be discharged to the outside of the battery cell in time, such that the pressure relief mechanism of the battery cell is less likely to undergo valve opening and cause the battery cell to fail when an excessive internal gas pressure reaches a threshold of the pressure relief mechanism. Therefore, the battery safety is improved.

In some embodiments, the maximum required gas venting volume of the battery cell per unit of total cycle time and the volume of carbon dioxide generated due to oxygen release caused by Cu-O bond breakage in the sodium-containing copper-based layered oxide satisfy the following formula: the maximum required gas venting volume of the battery cell per unit of total cycle $\text{time} = \dfrac{\frac{V_{CO2}}{a} - \frac{P_{max}}{1\,atm} \times V_{residual}}{T}$ , where $V_{CO2}$ is the volume of carbon dioxide generated in the battery cell within the total cycle time due to oxygen release caused by Cu-O bond breakage in the sodium-containing copper-based layered oxide, a is a proportion coefficient, in all gases, of the carbon dioxide generated due to oxygen release caused by Cu-O bond breakage in the sodium-containing copper-based layered oxide, a is 0.45 to 0.72, $P_{max}$ is a maximum acceptable internal pressure threshold of the battery cell, $V_{residual}$ is a residual volume of the battery cell, and T is the total cycle time of the battery cell.

In the technical solutions of the embodiments of the present application, the maximum required gas venting volume of the battery cell per unit of total cycle time and the volume of carbon dioxide generated due to oxygen release caused by Cu-O bond breakage in the sodium-containing copper-based layered oxide satisfy the above relationship, such that the maximum required gas venting volume of the battery cell per unit of total cycle time can be obtained by conversion based on the carbon dioxide generated due to oxygen release caused by Cu-O bond breakage in the sodium-containing copper-based layered oxide. Then, the air-permeable member with a certain air permeability is selected based on the gas venting volume of the battery cell within the total cycle time. By using the air-permeable member, the excess gas generated due to Cu-O bond breakage during the operation of the battery is discharged to the outside of the battery cell in time, such that the pressure relief mechanism of the battery cell is less likely to undergo valve opening and cause the battery cell to fail when an excessive internal gas pressure reaches the threshold of the pressure relief mechanism. Therefore, the battery safety is improved.

In some embodiments, the volume of carbon dioxide generated due to oxygen release caused by Cu-O bond breakage in the sodium-containing copper-based layered oxide satisfies the following formula:

$$V_{CO2} = \frac{b \times m_{Cu} \times M_O \times M_{CO2}}{M_{Cu} \times M_{O2} \times \rho_{CO2}};$$

, where b is 0.05 to 0.1, $m_{Cu}$ is a mass of a copper atom in the sodium-containing copper-based layered oxide, Mo is a molar mass of an oxygen atom, $M_{Co2}$ is a molar mass of the carbon dioxide, $M_{Cu}$ is a molar mass of the copper atom, $M_{O2}$ is a molar mass of the oxygen, and $\rho_{CO2}$ is a density of the carbon dioxide.

In the technical solutions of the embodiments of the present application, the volume of carbon dioxide generated due to oxygen release caused by Cu-O bond breakage in the sodium-containing copper-based layered oxide is obtained by the above formula, and the volume of carbon dioxide is related to the mass of the copper atom in the sodium-containing copper-based layered oxide. Therefore, air-permeable members with different air permeabilities are used for different masses of copper atoms in the active material. In this way, by using the air-permeable member, the excess gas that exceeds an acceptable gas volume for an internal pressure of the battery cell is discharged in time, such that the pressure relief mechanism of the battery cell is less likely to undergo valve opening and cause the battery cell to fail when an excessive internal gas pressure reaches the threshold of the pressure relief mechanism. Therefore, the battery safety is improved.

In some embodiments, a chemical formula of the sodium-containing copper-based layered oxide is $Na_q M_{x-}Cu_y O_2$, where M includes two or more elements selected from Ti, V, Cr, Mn, Fe, Co, Ni, or Zn, $0.81 \leq q \leq 1$, $0.8 < x+y \leq 1$, and $0.03 \leq y \leq 0.2$.

In the technical solutions of the embodiments of the present application, the chemical formula of the sodium-containing copper-based layered oxide is $Na_q M_x Cu_y O_2$, where $0.03 \leq y \leq 0.2$. The number of Cu atoms ranges from 0.03 to 0.2, such that a volume of gas production during the operation of the battery cell is not excessively large, no excessive electrolytic solution is consumed, and early termination of a cycle of the battery cell is not easily caused.

In some embodiments, M includes Ni, Mn, and Fe, $0.81 \leq q \leq 1$, $0.8 < x+y \leq 1$, and $0.05 \leq y \leq 0.2$.

In the technical solutions of the embodiments of the present application, the sodium-containing copper-based layered oxide, as a positive electrode active material, is a layered oxide containing active elements Cu, Ni, Mn, and Fe, such that the stability of the sodium-containing copper-based layered oxide is improved compared to other active elements, and the cost is lower. When the number of Cu atoms ranges from 0.05 to 0.2, the volume of gas production during the operation of the battery cell is not excessively large, no excessive electrolytic solution is consumed, and early termination of a cycle of the battery cell is not easily caused.

In some embodiments, the air-permeable member includes an air-permeable film, the outer packaging includes an end cover, and the air-permeable film is provided on the end cover.

In the technical solutions of the embodiments of the present application, the air-permeable film is provided on the end cover to discharge the excess gas inside the battery cell generated due to Cu-O bond breakage caused by the instability of the copper-based layered oxide to the outside of the battery cell. Since the end cover is located above the battery assembly, and the air-permeable film is provided on the end cover, the excess gas can easily go up and be discharged, such that the pressure relief mechanism of the battery cell is less likely to undergo valve opening and cause the battery cell to fail when an excessive internal gas pressure reaches the threshold of the pressure relief mechanism. Therefore, the battery safety is improved.

In some embodiments, a material of the air-permeable film includes at least one of polytetrafluoroethylene, polyethylene, or polypropylene.

In the technical solutions of the embodiments of the present application, the material of the air-permeable film may be at least one of polytetrafluoroethylene, polyethylene, or polypropylene, such that the selected air-permeable film has good waterproofing quality and air permeability.

In some embodiments, a pore size of the air-permeable film is 0.001 um to 0.5 um.

In the technical solutions of the embodiments of the present application, the air-permeable film within this pore size range exhibits good waterproofing quality and air permeability. Due to large spacing between gas molecules, the gas molecules can pass through air holes of the air-permeable film during molecular diffusion. In contrast, a spacing between liquid molecules is smaller than a spacing between the air holes, and under the effect of surface tension, the liquid molecules cannot pass through the air-permeable film, thereby achieving air permeability without liquid leakage.

In a second aspect, the embodiments of the present application provide a manufacturing method for a battery cell. The method includes the following steps:

obtaining a maximum required gas venting volume of the battery cell per unit of total cycle time, where the maximum required gas venting volume of the battery cell per unit of total cycle time is obtained by conversion based on a volume of carbon dioxide generated due to oxygen release caused by Cu-O bond breakage in a sodium-containing copper-based layered oxide;

selecting an air-permeable member with an air permeability equal to or greater than the maximum required gas venting volume of the battery cell per unit of total cycle time; and

mounting the air-permeable member onto an outer packaging of the battery cell.

In some embodiments, the step of obtaining the maximum required gas venting volume of the battery cell per unit of total cycle time, where the maximum required gas venting volume of the battery cell per unit of total cycle time is obtained by conversion based on the volume of carbon dioxide generated due to oxygen release caused by Cu-O bond breakage in the sodium-containing copper-based layered oxide, further includes: obtaining the maximum required gas venting volume of the battery cell based on the following formula:

the maximum required gas venting volume of the battery cell per unit of total cycle time = $\dfrac{\frac{V_{CO2}}{a} - \frac{P_{max}}{1\,atm} \times V_{residual}}{T}$, where

$V_{CO2}$ is the volume of carbon dioxide generated in the battery cell within the total cycle time due to oxygen release caused by Cu-O bond breakage in the sodium-containing copper-based layered oxide, a is a proportion coefficient, in all gases, of the carbon dioxide generated due to oxygen release caused by Cu-O bond breakage in the sodium-containing copper-based layered oxide, a is 0.45 to 0.72, $P_{max}$ is a maximum acceptable internal pressure threshold of the battery cell, $V_{residual}$ is a residual volume of the battery cell, and T is the total cycle time of the battery cell.

In some embodiments, the manufacturing method for a battery cell further includes: obtaining a volume of carbon dioxide generated due to oxygen release caused by Cu-O bond breakage in a sodium-containing copper-based layered oxide based on the following formula: $V_{CO2} = \dfrac{b \times m_{Cu} \times M_O \times M_{CO2}}{M_{Cu} \times M_{O2} \times \rho_{CO2}}$, where b is 0.05 to 0.1, $m_{Cu}$ is a mass of a copper atom in the sodium-containing copper-based layered oxide, $M_o$ is a molar mass of an oxygen atom, $M_{CO2}$ is a molar mass of the carbon dioxide, $M_{Cu}$ is a molar mass of the copper atom, $M_{O2}$ is a molar mass of the oxygen, and $\rho_{CO2}$ is a density of the carbon dioxide.

In a third aspect, the embodiments of the present application provide a battery, which includes the battery cell as described above.

In a fourth aspect, the embodiments of the present application provide an electric device, which includes the battery described above.

BRIEF DESCRIPTION OF THE DRAWINGS

To more clearly illustrate the technical solutions in embodiments of the present application, the drawings required for illustrating the embodiments or exemplary technologies are briefly described below. Apparently, the drawings in the following description illustrate merely some embodiments of the present application, and those of ordinary skill in the art may still derive other drawings from these drawings without creative efforts.

FIG. 1 is a schematic structural diagram of a vehicle according to some embodiments of the present application;

FIG. 2 is a schematic diagram of an exploded structure of a battery according to some embodiments of the present application; and

FIG. 3 is a schematic diagram of an exploded structure of a battery cell according to some embodiments of the present application.

Reference numerals in the drawings have the following meanings:

vehicle 1000;

battery 100, controller 200, motor 300;

case 10, first part 11, second part 12; and

battery cell 20, end cover 21, electrode terminal 21a, pressure relief mechanism 21b, housing 22, battery cell assembly 23, tab 23a, and air-permeable member 24.

DETAILED DESCRIPTION

To make the objectives, technical solutions, and advantages of the present application more apparent, the present application is further described in detail below with reference to the drawings and embodiments. It should be understood that the specific embodiments described herein are merely illustrative of the present application and are not intended to limit the present application.

It should be noted that when a component is referred to as being "fixed to" or "provided on" another component, the component can be directly on the other component or be indirectly on the other component. When a component is referred to as being "connected to" another component, the component can be directly or indirectly connected to the other component. The orientations or positional relationships indicated by the terms "upper", "lower", "left", "right", and the like are those shown based on the drawings. These terms are merely intended to facilitate description rather than to indicate or imply that the device or element referred to must have a specific orientation or be constructed and operated in the specific orientation, and thus should not be construed as a limitation to the embodiments of the present application. For those of ordinary skill in the art, the specific meanings of the above terms can be understood according to specific conditions. In addition, the terms "first" and "second" are used for description only and are not to be construed as indicating or implying relative importance or to implicitly indicate the number of technical features. The term "plurality of" means two or more, unless otherwise explicitly and specifically defined.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more. Similarly, "plurality of groups" refers to two or more groups, and "plurality of pieces" refers to two or more pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

For a sodium-ion battery in a related art, a positive electrode plate is coated with an active material copper-based layered oxide coating. When the battery is being used under a high voltage, the copper-based layered oxide becomes structurally unstable, and the copper-based layered oxide switches between +2 and +3 oxidation states during a cycle. However, copper in the +3 oxidation state has extremely strong oxidizability and is prone to oxygen release to form more stable divalent copper, causing more active sites on the surface of the material to be exposed to an electrolytic solution. Consequently, copper dissolves, a Cu-O bond breaks, and more oxygen is released, ultimately leading to an increase in gas production. The increase in a volume of the gas production inside the battery cell can easily increase an internal gas pressure. When the internal gas pressure of the battery cell is excessively high and reaches a valve opening threshold of a pressure relief mechanism, the pressure relief mechanism undergoes valve opening and causes the battery cell to fail. Excessive gas pressure may cause safety accidents such as an explosion, affecting the safety of the sodium-ion battery.

In view of the above considerations, a battery cell is designed to solve the problem during the use of the battery cell that the safety of the battery cell is affected by the valve opening and failure of the battery cell due to the increased volume of gas production caused by the instability of the copper-based layered oxide material. An air-permeable member with a certain air permeability is provided on an outer packaging of the battery cell, and the air permeability of the selected air-permeable member is equal to or greater than a maximum required gas venting volume of the battery cell per unit of total cycle time. The maximum required gas venting volume of the battery cell per unit of total cycle time is obtained by conversion based on a volume of carbon dioxide generated due to oxygen release caused by Cu-O bond breakage in a sodium-containing copper-based layered oxide. By using the air-permeable member, excess gas generated due to Cu-O bond breakage during the operation of the battery can be discharged to the outside of the battery cell in time, such that the pressure relief mechanism of the battery cell is less likely to undergo valve opening and cause the battery cell to fail when an excessive internal gas pressure reaches the threshold of the pressure relief mechanism. Therefore, the battery safety is improved.

The battery cell disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

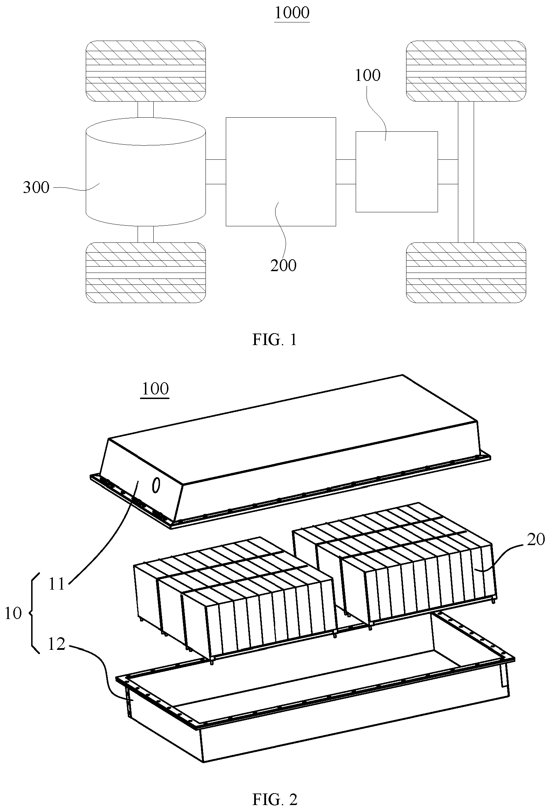

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded diagram of a battery 100 according to some embodiments of the present application. The battery 100 includes a case 10 and battery cells 20. The battery cells 20 are accommodated in the case 10. The case 10 is configured to provide an accommodating space for the battery cells 20, and the case 10 may be of various structures. In some embodiments, the case 10 may include a first part 11 and a second part 12. The first part 11 and the second part 12 are lidded with each other, and the first part 11 and the second part 12 jointly define an accommodating space for accommodating the battery cells 20. The second part 12 may be of a hollow structure with one end open, and the first part 11 may be of a plate-shaped structure. The open side of the second part 12 is lidded with the first part 11, such that the first part 11 and the second part 12 jointly define the accommodating space. The first part 11 and the second part 12 may also both be of a hollow structure with one side open, and the open side of the second part 12 is lidded with the open side of the first part 11. Certainly, the case 10 formed by the first part 11 and the second part 12 may be in various shapes, such as a cylinder and a rectangular parallelepiped.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may also be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving an electrical connection among the plurality of battery cells 20.

Each of the battery cells 20 may be a secondary battery or a primary battery, but is not limited thereto. The battery cell 20 may be cylindrical, flat, rectangular parallelepiped-shaped, or in other shapes.

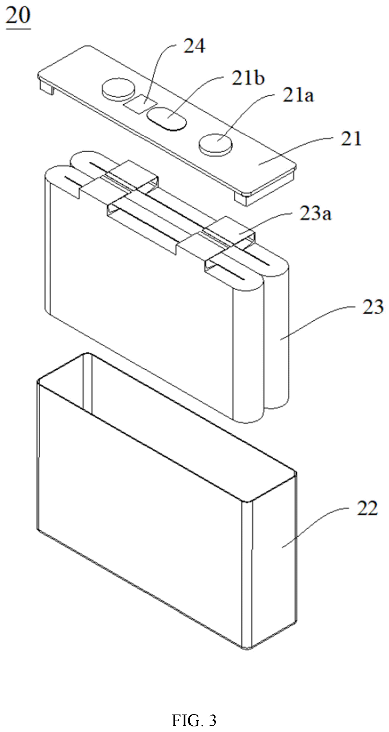

Referring to FIG. 3, FIG. 3 is a schematic diagram of an exploded structure of the battery cell 20 according to some embodiments of the present application. The battery cell 20 refers to the smallest unit forming a battery. As shown in FIG. 3, the battery cell 20 includes an outer packaging, a battery cell assembly 23, and other functional components. The outer packaging includes an end cover 21 and a housing 22.

The end cover 21 refers to a component that covers the opening of the housing 22 to isolate the internal environment of the battery cell 20 from the external environment. Without limitation, the shape of the end cover 21 may be adapted to the shape of the housing 22 to cooperate with the housing 22. Optionally, the end cover 21 may be made of a material with a certain hardness and strength (for example, an aluminum alloy), such that the end cover 21 is not easily deformed when being squeezed or collided. This enables the battery cell 20 to have higher structural strength, and the safety performance can also be improved. The end cover 21 may be provided with functional components such as an electrode terminal 21a. The electrode terminal 21a may be configured to be electrically connected to the battery cell assembly 23 to output or input the electric energy of the battery cell 20. In some embodiments, the end cover 21 may also be provided with a pressure relief mechanism 21b for releasing the internal pressure when the internal pressure or temperature of the battery cell 20 reaches a threshold. The end cover 21 may also be made of various materials, such as copper, iron, aluminum, stainless steel, aluminum alloy, and plastic, which is not specifically limited in the embodiments of the present application. In some embodiments, the inner side of the end cover 21 may also be provided with an insulating member, and the insulating member may be configured to isolate an electrical connection component in the housing 22 from the end cover 21 to reduce the risk of short circuits. Illustratively, the insulating member may be made of plastic, rubber, or the like.

The housing 22 is a component configured to form the internal environment of the battery cell 20 in combination with the end cover 21. The formed internal environment may be used to accommodate the battery cell assembly 23, the electrolytic solution, and other components. The housing 22 and the end cover 21 may be independent components. An opening may be formed in the housing 22, and at the opening, the end cover 21 lids the opening to form the internal environment of the battery cell 20. Without limitation, the end cover 21 and the housing 22 may also be integrated. Specifically, the end cover 21 and the housing 22 may form a common connecting surface before other components are placed in the housing, and when the interior of the housing 22 needs to be encapsulated, the housing 22 is lidded with the end cover 21. The housing 22 may be in various shapes and sizes, such as a rectangular parallelepiped, a cylinder, and a hexagonal prism. Specifically, the shape of the housing 22 may be determined based on the specific shape and size of the battery cell assembly 23. The housing 22 may be made of various materials, such as copper, iron, aluminum, stainless steel, aluminum alloy, and plastic, which is not specially limited in the embodiments of the present application.

The battery cell assembly 23 is a component where the electrochemical reaction occurs in the battery cell 100. One or more battery cell assemblies 23 may be accommodated in the housing 22. The battery cell assembly 23 is mainly formed by winding or stacking a positive electrode plate and a negative electrode plate, and a separator is generally provided between the positive electrode plate and the negative electrode plate. The portions of the positive electrode plate and the negative electrode plate that contain active substances constitute the body part of the battery cell assembly, and the portions of the positive electrode plate and the negative electrode plate that do not contain active substances each constitute a tab 23a. The positive electrode tab and the negative electrode tab may be located together at one end of the main body part or separately at two ends of the main body part. During charging and discharging of the battery, the positive electrode active substance and the negative electrode active substance react with the electrolytic solution, and the tabs 23a are connected to the electrode terminals to form a current circuit.

According to some embodiments of the present application, referring to FIG. 3, the embodiments of the present application provide a battery cell. The battery cell 20 includes a battery cell assembly 23 and an outer packaging. The battery cell assembly 23 includes a positive electrode plate, an active material coating is provided on the positive electrode plate, and the active material coating includes a sodium-containing copper-based layered oxide. The outer packaging is configured to encapsulate the battery cell assembly 23, an air-permeable member 24 is provided on the outer packaging, an air permeability of the air-permeable member 24 is greater than or equal to a maximum required gas venting volume of the battery cell 20 per unit of total cycle time, and the maximum required gas venting volume of the battery cell 20 per unit of total cycle time is obtained by conversion based on a volume of carbon dioxide generated due to oxygen release caused by Cu-O bond breakage in the sodium-containing copper-based layered oxide.

The battery cell assembly 23 is a part of the battery cell where electrochemical reaction occurs. The positive electrode plate of the battery cell assembly 23 is coated with the active material coating, and the active material coating includes the sodium-containing copper-based layered oxide for reacting with an electrolytic solution. The air-permeable member 24 is a component that is air permeable, liquid leakproof, and resistant to electrolyte corrosion, and is configured to discharge excess gas generated inside the battery cell 20 to the outside of the battery cell in time. The air permeability of the air-permeable member 24 refers to a volume of gas passing therethrough per unit time. The maximum required gas venting volume of the battery cell per unit of total cycle time refers to an amount of gas that needs to be vented per day, as calculated based on the total cycle time, to prevent valve opening of the pressure relief mechanism and failure.

In the technical solutions of the embodiments of the present application, during the operation of the battery cell, the sodium-containing copper-based layered oxide as a positive electrode material becomes structurally unstable under a high voltage (greater than or equal to 4.0 V), causing more active sites on the surface of the active material coating to be exposed to an electrolytic solution. Consequently, copper dissolves, the Cu-O bond breaks, and more oxygen is released, ultimately leading to an increase in gas production. In the technical solutions of the embodiments of the present application, the air-permeable member is provided on the outer packaging of the battery cell, and the air permeability of the selected air-permeable member is equal to or greater than the maximum required gas venting volume of the battery cell per unit of total cycle time. The maximum required gas venting volume is obtained by conversion based on the volume of carbon dioxide generated due to oxygen release caused by Cu-O bond breakage in the sodium-containing copper-based layered oxide. By using the air-permeable member, the excess gas generated due to Cu-O bond breakage during the operation of the battery cell can be discharged to the outside of the battery cell in time, such that the pressure relief mechanism of the battery cell is less likely to undergo valve opening and cause the battery cell to fail when an excessive internal gas pressure reaches the threshold of the pressure relief mechanism. Therefore, the battery safety is improved.

In some embodiments of the present application, the maximum required gas venting volume of the battery cell per unit of total cycle time and the volume of carbon dioxide generated due to oxygen release caused by Cu-O bond breakage in the sodium-containing copper-based layered oxide satisfy the following formula: the maximum required gas venting volume of the battery cell per unit of total cycle $\text{time} = \dfrac{\frac{V_{CO2}}{a} - \frac{P_{max}}{1\,atm} \times V_{residual}}{T}$, where $V_{CO2}$ is the volume of carbon dioxide generated in the battery cell within the total cycle time due to oxygen release caused by Cu-O bond breakage in the sodium-containing copper-based layered oxide, a is a proportion coefficient, in all gases, of the carbon dioxide generated due to oxygen release caused by Cu-O bond breakage in the sodium-containing copper-based layered oxide, a is 0.45 to 0.72, $P_{max}$ is a maximum acceptable internal pressure threshold of the battery cell, $V_{residual}$ is a residual volume of the battery cell, and T is the total cycle time of the battery cell.

During the charging and discharging of the battery cell, in a case that the sodium-containing copper-based layered oxide, as the positive electrode active material, generates gas due to Cu-O bond breakage, a gas volume of all generated carbon dioxide accounts for 50% to 80% of a total gas volume, and a volume of carbon dioxide released due to oxygen release caused by Cu-O bond breakage during a cycle accounts for more than 90% of all carbon dioxide. Therefore, in the present application, the value of a ranges from 0.45 to 0.72. That is, the carbon dioxide generated in the battery cell within the total cycle time due to oxygen release caused by Cu-O bond breakage in the sodium-containing copper-based layered oxide accounts for 45% to 72% of all gases generated within the total cycle time. Then, the maximum required gas venting volume of the battery cell and the air permeability of the air-permeable member are obtained by conversion based on the volume of carbon dioxide generated due to release caused by Cu-O bond breakage. The air permeability of the selected air-permeable member can satisfy the requirement of discharging excess gas generated inside the battery cell due to Cu-O breakage to the outside of the battery cell in time.

The "total cycle time of the battery cell" refers to the total time of all required cycles of the battery cell, that is, a product of a required number of cycles of the battery cell and the time for each cycle. The "maximum acceptable internal pressure threshold of the battery cell" refers to a threshold of the pressure relief mechanism 21b, that is, a minimum gas pressure value that causes valve opening of the pressure relief mechanism 21b. The "residual volume of the battery cell" refers to a volume in the battery cell 20 excluding all solid and liquid parts (including a positive electrode plate, a negative electrode plate, a separation film, a mechanical component, an electrolytic solution, and the like), that is, a volume occupied by gas.

In the technical solutions of the embodiments of the present application, the maximum required gas venting volume of the battery cell per unit of total cycle time and the volume of carbon dioxide generated due to oxygen release caused by Cu-O bond breakage in the sodium-containing copper-based layered oxide satisfy the above relationship, such that the maximum required gas venting volume of the battery cell per unit of total cycle time can be obtained by conversion based on the volume of carbon dioxide generated due to oxygen release caused by Cu-O bond breakage in the sodium-containing copper-based layered oxide. Then, the air-permeable member with a certain air permeability is selected based on the maximum required gas venting volume of the battery cell per unit of total cycle time. By using the air-permeable member, the excess gas generated due to Cu-O bond breakage during the operation of the battery cell is discharged to the outside of the battery cell in time, such that the pressure relief mechanism of the battery cell is less likely to undergo valve opening and cause the battery cell to fail when an excessive internal gas pressure reaches the threshold of the pressure relief mechanism. Therefore, the battery safety is improved.

In some embodiments of the present application, the volume of carbon dioxide generated due to oxygen release caused by Cu-O bond breakage in the sodium-containing copper-based layered oxide satisfies the following formula:

$$V_{CO2} = \frac{b \times m_{Cu} \times M_O \times M_{CO2}}{M_{Cu} \times M_{O2} \times \rho_{CO2}}$$ , where b is 0.05 to 0.1, $m_{Cu}$ is a mass of a copper atom in the sodium-containing copper-based layered oxide, $M_o$ is a molar mass of an oxygen atom, $M_{CO2}$ is a molar mass of the carbon dioxide, $M_{Cu}$ is a molar mass of the copper atom, $M_{O2}$ is a molar mass of the oxygen, and $\rho_{CO2}$ is a density of the carbon dioxide.

In the technical solutions of the embodiments of the present application, since the service life of the battery comes to an end when oxygen release caused by the breakage of 5% to 10% of Cu-O bonds occurs in the sodium-containing copper-based layered oxide, in the present application, the value of b ranges from 0.05 to 0.1, calculated based on the volume of carbon dioxide generated due to oxygen release caused by the breakage of 5% to 10% of Cu-O bonds in the sodium-containing copper-based layered oxide. The volume of carbon dioxide generated due to oxygen release caused by Cu-O bond breakage in the sodium-containing copper-based layered oxide is obtained by the above formula, and the volume of carbon dioxide is related to the mass of the copper atom in the sodium-containing copper-based layered oxide. Therefore, air-permeable members with different air permeabilities are used for different masses of copper atoms in the active material. In this way, by using the air-permeable member, the excess gas that exceeds an acceptable gas volume for an internal pressure of the battery cell is discharged in time, such that the pressure relief mechanism of the battery cell is less likely to undergo valve opening and cause the battery cell to fail when an excessive internal gas pressure reaches the threshold of the pressure relief mechanism. Therefore, the battery safety is improved.

In some embodiments of the present application, the maximum required gas venting volume of the battery cell per unit of total cycle time may be obtained in the following manner:

The maximum required gas venting volume of the battery cell per unit of total cycle time satisfies the following formulas: $V_t = V_p/T$, and $V_p = \dfrac{V_{CO2}}{a} - V_{EOL}$, where $V_t$ is the maximum required gas venting volume of the battery cell per unit of total cycle time, measured in ml/day. $V_p$ is a maximum volume of gas required to be discharged from the battery cell till the end of all cycles of the battery cell, measured in ml. T is the total cycle time of the battery cell, measured in days (24 h per day). $V_{CO2}$ is the volume of carbon dioxide generated due to oxygen release caused by Cu-O bond breakage in the sodium-containing copper-based layered oxide, measured in ml. $V_{EOL}$ is an acceptable volume of gas that can be generated concerning the internal pressure of the battery cell till the end of all cycles of the battery cell, measured in ml.

The relationship between the volume of carbon dioxide $V_{CO2}$ generated due to oxygen release caused by Cu-O bond breakage in the sodium-containing copper-based layered oxide of the battery cell and the mass of the copper atom in the sodium-containing copper-based layered oxide satisfies the following formulas: $V_{CO2} = m_{CO2}/\rho_{CO2}$, $m_{CO2} = b \times m_o \times M_{CO2}/M_{O2}$, and $m_o = m_{Cu} \times M_o/M_{Cu}$. b is 0.05 to 0.1, and $m_{CO2}$ is a mass of the carbon dioxide generated due to oxygen release caused by Cu-O bond breakage in the sodium-containing copper-based layered oxide, measured in g. $\rho_{CO2}$ is a density of the released carbon dioxide, measured in g/L, and the density of the carbon dioxide is 1.997 g/L. $m_o$ is a mass of an oxygen atom bonded to the copper atom in the sodium-containing copper-based layered oxide, measured in g. $m_{Cu}$ is a mass of the copper atom in the sodium-containing copper-based layered oxide, measured in g. $M_{CO2}$ is a molar mass of the carbon dioxide, measured in g/mol. $M_{O2}$ is a molar mass of the oxygen, measured in g/mol.

The mass $m_{Cu}$ of the copper atom in the sodium-containing copper-based layered oxide satisfies the following formula: $m_{Cu} = m \times W_{Cu}$, where m is the weight of the sodium-containing copper-based layered oxide, measured in g. $W_{Cu}$ is a mass fraction of the element copper in the copper-based layered oxide, measured in %.

The acceptable volume of gas $V_{EOL}$ that can be generated concerning the internal pressure of the battery cell till the end of all cycles of the battery cell satisfies the following formula: $V_{EOL} = \dfrac{P_{max}}{1\,atm} \times V_{residual}$ , where $P_{max}$ is a maximum acceptable internal pressure threshold of the battery cell till the end of all cycles of the battery cell, measured in Mpa. When the internal pressure of the battery cell reaches the threshold, the pressure relief mechanism 21b may undergo valve opening, and an excessively high pressure may cause safety accidents such as an explosion. Vresidual is a residual volume of the battery cell. The unit is ml. The residual volume of the battery cell refers to a volume in the battery cell 20 excluding all solid and liquid parts (including a positive electrode plate, a negative electrode plate, a separation film, a mechanical component, an electrolytic solution, and the like), that is, a volume occupied by gas.

The total cycle time T of the battery cell satisfies the following formula: $T = X \times t$, where X is the required number of cycles of the battery cell at 25 °C, for example, 1000 cycles; t refers to cycle time of one cycle, measured in h. The total cycle time of the battery cell may be calculated in units of "days", with 24 h per day. One cycle of the battery cell is subject to the following process: (1) charging up to 4.0 V at 0.33C cross current (about 3 h); (2) rest for 0.5 h; (3) discharging to 1.5 V at 0.33C cross current (about 3 h); and (4) rest for 0.5 h. Steps (1) to (4) are repeated until the cell decays to 80% of an initial capacity. C refers to the capacity of the battery cell. The capacity C of the battery cell satisfies the following formula: $C = m \times K$, where m refers to the weight of the sodium-containing copper-based layered oxide, measured in g; K refers to a capacity that can be delivered per gram of the active material, i.e., the sodium-containing copper-based layered oxide, measured in mAh/g.

In some embodiments of the present application, a chemical formula of the sodium-containing copper-based layered oxide is $Na_qM_xCu_yO_2$, where M includes two or more elements selected from Ti, V, Cr, Mn, Fe, Co, Ni, or Zn, $0.81 \leq q \leq 1$, $0.8 < x+y \leq 1$, and $0.03 \leq y \leq 0.2$.

In the technical solutions of the embodiments of the present application, the chemical formula of the sodium-containing copper-based layered oxide is $Na_qM_xCu_yO_2$, where $0.03 \leq y \leq 0.2$. The number of Cu atoms ranges from 0.03 to 0.2, such that a volume of gas production during the operation of the battery cell is not excessively large, no excessive electrolytic solution is consumed, and early termination of a cycle of the battery cell is not easily caused.

In some embodiments of the present application, a chemical formula of the sodium-containing copper-based layered oxide is $Na_qM_xCu_yO_2$, where M includes Ni, Mn, and Fe, $0.81 \leq q \leq 1$, $0.8 < x+y \leq 1$, and $0.05 \leq y \leq 0.2$.

In the technical solutions of the embodiments of the present application, the sodium-containing copper-based layered oxide, as a positive electrode active material, is a layered oxide containing active elements Cu, Ni, Mn, and Fe, such that the stability of the copper-based layered oxide is improved compared to other active elements, and the cost is lower. When the number of Cu atoms ranges from 0.05 to 0.2, the volume of gas production during the operation of the battery cell is not excessively large, no excessive electrolytic solution is consumed, and early termination of a cycle of the battery cell is not easily caused.

In some embodiments of the present application, referring to FIG. 3, the air-permeable member 24 includes an air-permeable film, the outer packaging includes an end cover 21, and the air-permeable film is provided on the end cover 21.

The statement "the air-permeable film is provided on the end cover 21" may mean that the air-permeable film is provided at any position on the end cover 21 except for the electrode terminal 21a and the pressure relief mechanism 21b, such that other functional components are not affected, and the excess gas generated inside the battery cell can be discharged from the outer packaging, achieving waterproofing function and air permeability. The air-permeable film may be an air-permeable member with air holes, and the air-permeable film may be circular, square, rectangular, diamond-shaped, oval, or in other irregular shapes. A mounting opening for the air-permeable film may be reserved on the end cover 21. An edge of the air-permeable film and an edge of the mounting opening may be in a sealing connection by, for example, adhesion or welding, and gas communication between the inside and the outside of the end cover 21 is achieved through the air-permeable film.

In the technical solutions of the embodiments of the present application, the air-permeable film is provided on the end cover 21 to discharge the excess gas inside the battery cell generated due to Cu-O bond breakage caused by the instability of the copper-based layered oxide to the outside of the battery cell, such that the pressure relief mechanism of the battery cell is less likely to undergo valve opening and cause the battery cell to fail when an excessive internal gas pressure reaches the threshold of the pressure relief mechanism. Therefore, the battery safety is improved.

In some embodiments of the present application, a material of the air-permeable film includes at least one of polytetrafluoroethylene (PTFE), polyethylene (UHMWPE), or polypropylene (PP), optionally polytetrafluoroethylene (PTFE).

In the technical solutions of the embodiments of the present application, the material of the air-permeable film may be at least one of PTFE, UHMWPE, or PP, such that the selected air-permeable film has good waterproofing quality and air permeability.

In the technical solutions of the embodiments of the present application, a pore size of the air-permeable film is 0.001 um to 0.5 um.

The air-permeable film within this pore size range exhibits good waterproofing quality and air permeability. Due to large spacing between gas molecules, the gas molecules can pass through air holes of the air-permeable film during molecular diffusion. In contrast, a spacing between liquid molecules is smaller than a spacing between the air holes, and under the effect of surface tension, the liquid molecules cannot pass through the air-permeable film, thereby achieving air permeability without liquid leakage.

In some embodiments of the present application, the thickness of the air-permeable film is 1 mm to 5 mm, optionally 2 mm.

In a second aspect, the present application provides a manufacturing method for a battery cell. The method is used for manufacturing the battery cell described above and includes the following steps:

obtaining a maximum required gas venting volume of the battery cell per unit of total cycle time, where the maximum required gas venting volume of the battery cell per unit of total cycle time is obtained by conversion based on a volume of carbon dioxide generated due to oxygen release caused by Cu-O bond breakage in a sodium-containing copper-based layered oxide;

selecting an air-permeable member with an air permeability equal to or greater than the maximum required gas venting volume of the battery cell per unit of total cycle time; and

mounting the air-permeable member onto an outer packaging of the battery cell.

In the manufacturing method according to the present application, the maximum required gas venting volume of the battery cell per unit of total cycle time is obtained by conversion based on the volume of carbon dioxide generated due to oxygen release caused by Cu-O bond breakage in the sodium-containing copper-based layered oxide in a positive electrode material coating. The air-permeable member with the air permeability equal to or greater than the maximum required gas venting volume is selected based on the maximum required gas venting volume of the battery cell per unit of total cycle time. Then, the air-permeable member is mounted onto the outer packaging of the battery cell. By using the air-permeable member, the excess gas generated due to Cu-O bond breakage during the operation of the battery can be discharged to the outside of the battery cell in time, such that the pressure relief mechanism of the battery cell is less likely to undergo valve opening and cause the battery cell to fail when an excessive internal gas pressure reaches a threshold of the pressure relief mechanism. Therefore, the battery safety is improved.

In some embodiments of the present application, the step of obtaining the maximum required gas venting volume of the battery cell per unit of total cycle time, where the maximum required gas venting volume of the battery cell per unit of total cycle time is obtained by conversion based on the volume of carbon dioxide generated due to oxygen release caused by Cu-O bond breakage in the sodium-containing copper-based layered oxide, further includes: obtaining the maximum required gas venting volume of the battery cell based on the following formula:

the maximum required gas venting volume of the battery cell per unit of total cycle $\text{time} = \dfrac{\dfrac{V_{CO2}}{a} - \dfrac{P_{max}}{1\,atm} \times V_{residual}}{T}$ , where

$V_{CO2}$ is the volume of carbon dioxide generated in the battery cell within the total cycle time due to oxygen release caused by Cu-O bond breakage in the sodium-containing copper-based layered oxide, a is a proportion coefficient, in all gases, of the carbon dioxide generated due to oxygen release caused by Cu-O bond breakage in the sodium-containing copper-based layered oxide, a is 0.45 to 0.72, $P_{max}$ is a maximum acceptable internal pressure threshold of the battery cell, $V_{residual}$ is a residual volume of the battery cell, and T is the total cycle time of the battery cell.

In some embodiments of the present application, a volume of carbon dioxide generated due to oxygen release caused by Cu-O bond breakage in a sodium-containing copper-based layered oxide is obtained based on the following

formula: $V_{CO2} = \dfrac{b \times m_{Cu} \times M_O \times M_{CO2}}{M_{Cu} \times M_{O2} \times \rho_{CO2}}$ , where b is 0.05 to 0.1, $m_{Cu}$ is a mass of a copper atom in the sodium-containing copper-based layered oxide, $M_o$ is a molar mass of an oxygen atom, $M_{CO2}$ is a molar mass of the carbon dioxide, $M_{Cu}$ is a molar mass of the copper atom, $M_{O2}$ is a molar mass of the oxygen, and $p_{CO2}$ is a density of the carbon dioxide.

In a third aspect, the present application further provides a battery. The battery includes the battery cell described above.

In a fourth aspect, the present application further provides an electric device. The electric device includes the battery described above.

The present application will be described below in conjunction with specific embodiments. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

**Example 1:**

This example provides a battery cell. The battery cell in this example includes a battery cell assembly 23 and an air-permeable film. The battery cell assembly 23 includes a positive electrode plate, and the positive electrode plate is coated with a sodium-containing copper-based layered oxide as a positive electrode active substance.

In Example 1, a chemical formula of the sodium-containing copper-based layered oxide is $Na_{0.9}Cu_{0.2}Ni_{0.15}Fe_{0.25}Mn_{0.4}O_2$. A molar molecular mass is 110.1 g/mol, the weight m of the coated positive electrode active substance is 1000 g, a specific capacity K of the active substance is 135 mAh/g, and a capacity C of the positive electrode active substance (C = m × K) is 135,000 mAh. A mass fraction $W_{cu}$ of the element copper in the copper-based layered oxide $Na_{0.9}Cu_{0.2}Ni_{0.15}Fe_{0.25}Mn_{0.4}O_2$ accounts for 11.5% in the copper-based layered oxide. A mass $m_{cu}$ of copper atoms in the copper-based layered oxide $Na_{0.9}Cu_{0.2}Ni_{0.15}Fe_{0.25}Mn_{0.4}O_2$ ($m_{cu} = m \times W_{cu}$) is 115.4 g. A mass $m_o$ of oxygen atoms bonded to the copper atoms in the copper-based layered oxide $Na_{0.9}Cu_{0.2}Ni_{0.15}Fe_{0.25}Mn_{0.4}O_2$ ($m_o = m_{cu} \times$ 16/63.55) is 28.85 g. A maximum mass $m_{Co2}$ of released carbon dioxide ($m_{Co2} = 0.1 \times m_o \times$ 44/32; when 5% to 10% of copper-oxygen bonds break, the copper-based layered oxide undergo a severe collapse and a sharp plummet in cycles, where the calculation is performed based on b = 0.1) is 4.0 g. A density $\rho_{Co2}$ of the carbon dioxide is 1.977 g/L. A maximum volume $V_{CO2}$ of released carbon dioxide ($V_{Co2} = m_{Co2}/\rho_{Co2}$) is 2006 ml. A volume of all released gases is

$$\frac{V_{CO2}}{a} = 4458.7 ml$$

. A residual volume $V_{residual}$ of the battery cell is 162 ml, and a designed unit residual volume Vresidual' of the battery cell (Vresidual' = Vresidual/C) is 1.2 ml/Amh, that is, a space that can be occupied by gas per unit capacity. A maximum acceptable internal pressure threshold Pmax of the battery cell till the end of all cycles of the battery cell is 0.35 MPa, and an acceptable volume of gas $V_{EOL}$ that can be generated inside the battery cell till the end of all cycles of the battery cell is 567 ml. In this case, a maximum gas volume $V_p$ required to be discharged from the battery cell (

$$V_p = \frac{V_{CO2}}{a} - V_{EOL}$$

) is 3892 ml (a is 0.45). The number of cycles X at 25 °C required for the battery cell is 1000, and cycle time t of one cycle is 7 h. Therefore, the total cycle time of the battery cell is 292 days, with 24 h per day. Accordingly, the maximum required gas venting volume $V_t$ of the battery cell within the total cycle time ($V_t = V_p/T$) is 13.3 ml/day.

Preparation of positive electrode slurry:

The sodium-containing copper-based layered oxide $Na_{0.9}Cu_{0.2}Ni_{0.15}Fe_{0.25}Mn_{0.4}O_2$, a binder, and a conductive carbon were mixed based on mass percentages of 94%, 2.5%, and 3.5%, and then a stirring solvent NMP was added for stirring to obtain a positive electrode slurry. A mass ratio of the added stirring solvent NMP to the fixed mixture was 4:6. The binder is PVDF.

Preparation of negative electrode slurry:

A hard carbon, a binder, a thickener, and a conductive carbon were mixed based on mass percentages of 94%, 4%, 1%, and 1%, and then a stirring solvent NMP was added for stirring to obtain a negative electrode slurry. A mass of the added stirring solvent NMP and the fixed mixture was 5:5.

Then, the battery cell assembly was prepared through the following processes: coating → cold pressing → die cutting → winding → assembly → liquid injection → aging→ formation.

In this example, an air-permeable film is provided on an end cover 21 of the battery cell. The material of the selected air-permeable film is PTFE, the thickness of the air-permeable film is 2 mm, the area of the air-permeable film is 19.63 mm², the pore size of the air-permeable film is 0.45 um, the total air-permeable area is 5 mm², and the air permeability of the selected air-permeable film is 15 ml/day. In this example, tests showed that a pressure relief mechanism did not undergo valve opening during the total cycle time of the battery cell, and the number of cycles of the battery cell in this example could reach the required 1000 cycles.

**Example 2:**

This example provides another battery cell. The battery cell in this example includes a battery cell assembly 23 and an air-permeable film. The battery cell assembly 23 includes a positive electrode plate, and the positive electrode plate is coated with a sodium-containing copper-based layered oxide as a positive electrode active substance.

In Example 2, a chemical formula of the sodium-containing copper-based layered oxide is $Na_{0.9}Cu_{0.1}Ni_{0.25}Fe_{0.25}Mn_{0.4}O_2$. A molar molecular mass is 109.7 g/mol, the weight m of the coated positive electrode active substance is 1000 g, a specific capacity K of the active substance is 135 mAh/g, and a capacity C of the positive electrode active substance (C = m × K) is 135,000 mAh. A mass fraction $W_{cu}$ of the element copper in the copper-based layered oxide $Na_{0.9}Cu_{0.1}Ni_{0.25}Fe_{0.25}Mn_{0.4}O_2$ accounts for 5.8% in the copper-based layered oxide. A mass $m_{cu}$ of copper atoms in the copper-based layered oxide $Na_{0.9}Cu_{0.1}Ni_{0.25}Fe_{0.25}Mn_{0.4}O_2$ is 57.95 g. A mass $m_o$ of oxygen atoms bonded to the copper atoms in the copper-based layered oxide $Na_{0.9}Cu_{0.1}Ni_{0.25}Fe_{0.25}Mn_{0.4}O_2$ ($m_o = m_{cu} \times 16/63.55$) is 14.49 g. A maximum mass $m_{Co2}$ of released carbon dioxide ($m_{Co2} = 0.1 \times m_o \times 44/32$ (b = 0.1)) is 2.0 g. A density $\rho_{Co2}$ of the carbon dioxide is 1.977 g/L. A maximum volume $V_{Co2}$ of released carbon dioxide ($V_{Co2} = m_{Co2}/\rho_{Co2}$) is 1008 ml. A volume of all released gases is

$$\frac{V_{CO2}}{a} = 2239.3 ml$$

. A residual volume $V_{residual}$ of the battery cell is 162 ml, and a designed unit residual volume $V_{residual'}$ of the battery cell ($V_{residual'} = V_{residual}/C$) is 1.2 ml/Amh, that is, a space that can be occupied by gas per unit capacity. A maximum acceptable internal pressure threshold Pmax of the battery cell till the end of all cycles of the battery cell is 0.35 MPa, and an acceptable volume of gas $V_{EOL}$ that can be generated inside the battery cell till the end of all cycles of the battery cell is 567 ml. In this case, a gas volume $V_p$ required to be discharged from the battery cell (

$$Vp = \frac{V_{CO2}}{a} - V_{EOL}$$

) is 1672 ml (a is 0.45). The number of cycles X at 25 °C required for the battery cell is 1000, and cycle time t of one cycle is 7 h. Therefore, the total cycle time of the battery cell is 292 days, with 24 h per day. Accordingly, the maximum required gas venting volume $V_t$ of the battery cell per unit of total cycle time ($V_t = V_p/T$) is 5.7 ml/day.

Preparation of positive electrode slurry:

The sodium-containing copper-based layered oxide $Na_{0.9}Cu_{0.1}Ni_{0.25}Fe_{0.25}Mn_{0.4}O_2$, a binder, and a conductive carbon were mixed based on mass percentages of 94%, 2.5%, and 3.5%, and then a stirring solvent NMP was added for stirring to obtain a positive electrode slurry. A mass ratio of the added stirring solvent NMP to the fixed mixture was 4:6. The binder is PVDF.

Preparation of negative electrode slurry:

A hard carbon, a binder, a thickener, and a conductive carbon were mixed based on mass percentages of 94%, 4%, 1%, and 1%, and then a stirring solvent NMP was added for stirring to obtain a negative electrode slurry. A mass of the added stirring solvent NMP and the fixed mixture was 5:5.

Then, the battery cell assembly was prepared through the following processes: coating → cold pressing → die cutting → winding → assembly → liquid injection → aging→ formation.

In this example, an air-permeable film is provided on an end cover 21 of the battery cell. The material of the air-permeable film is PTFE, the thickness of the air-permeable film is 2 mm, the area of the air-permeable film is 19.63 mm$^2$, the pore size of the air-permeable film is 0.19 um, the total air-permeable area is 2.15 mm$^2$, and the air permeability of the selected air-permeable film is 6 ml/day. In this example, tests showed that a pressure relief mechanism did not undergo valve opening during the total cycle time of the battery cell, and the number of cycles of the battery cell in this example could reach 1000 cycles.

**Example 3:**

This example provides yet another battery cell. The battery cell in this example includes a battery cell assembly 23 and an air-permeable film. The battery cell assembly 23 includes a positive electrode plate, and the positive electrode plate is coated with a sodium-containing copper-based layered oxide as a positive electrode active substance.

In Example 3, a chemical formula of the sodium-containing copper-based layered oxide is $Na_{0.9}Cu_{0.05}Ni_{0.3}Fe_{0.25}Mno_{0.4}O_2$. A molar molecular mass is 109.4 g/mol, the weight m of the coated positive electrode active substance is 1000 g, a specific capacity K of the active substance is 135 mAh/g, and a capacity C of the positive electrode active substance ($C = m \times K$) is 135,000 mAh. A mass fraction $W_{cu}$ of the element copper in the sodium-containing copper-based layered oxide $Na_{0.9}Cu_{0.05}Ni_{0.3}Fe_{0.25}Mn_{0.4}O_2$ accounts for 2.9% in the copper-based layered oxide. A mass $m_{cu}$ of copper atoms in the copper-based layered oxide $Na_{0.9}Cu_{0.05}Ni_{0.3}Fe_{0.25}Mn_{0.4}O_2$ is 29.04 g. A mass $m_o$ of oxygen atoms bonded to the copper atoms in the copper-based layered oxide $Na_{0.9}Cu_{0.05}Ni_{0.3}Fe_{0.25}Mn_{0.4}O_2$ ($m_o = m_{cu} \times 16/63.55$) is 7.26 g. A maximum mass $m_{Co2}$ of released carbon dioxide ($m_{Co2} = 0.1 \times m_o \times 44/32$ (b = 0.1)) is 1.0 g. A density $\rho_{Co2}$ of the carbon dioxide is 1.977 g/L. A maximum volume $V_{Co2}$ of released carbon dioxide ($V_{Co2} = m_{Co2}/\rho_{Co2}$) is

505 ml. A volume of all released gases is $\dfrac{V_{CO2}}{a} = 1122.1 \mathrm{ml}$. A residual volume $V_{residual}$ of the battery cell is 162 ml, and a designed unit residual volume $V_{residual}'$ of the battery cell ($V_{residual}' = V_{residual}/C$) is 1.2 ml/Amh, that is, a space that can be occupied by gas per unit capacity. A maximum acceptable internal pressure threshold $P_{max}$ of the battery cell till the end of all cycles of the battery cell is 0.35 MPa, and an acceptable volume of gas $V_{EOL}$ that can be generated inside the battery cell till the end of all cycles of the battery cell is 567 ml. In this case, a maximum gas volume $V_p$ required to be discharged from the battery cell ($V_P = \dfrac{V_{CO2}}{a} - V_{EOL}$) is 555 ml (a is 0.45). The number of cycles X at 25 °C required for the battery cell is 1000, and cycle time t of one cycle is 7 h. Therefore, the total cycle time of the battery cell is 291 days, with 24 h per day. Accordingly, the maximum required gas venting volume $V_t$ of the battery cell per unit of total cycle time ($V_t = V_p/T$) is 1.9 ml/day.

Preparation of positive electrode slurry:

The sodium-containing copper-based layered oxide $Na_{0.9}Cu_{0.05}Ni_{0.3}Fe_{0.25}Mn_{0.4}O_2$, a binder, and a conductive carbon were mixed based on mass percentages of 94%, 2.5%, and 3.5%, and then a stirring solvent NMP was added for stirring to obtain a positive electrode slurry. A mass ratio of the added stirring solvent NMP to the fixed mixture was 4:6. The binder is PVDF.

Preparation of negative electrode slurry:

A hard carbon, a binder, a thickener, and a conductive carbon were mixed based on mass percentages of 94%, 4%, 1%, and 1%, and then a stirring solvent NMP was added for stirring to obtain a negative electrode slurry. A mass of the added stirring solvent NMP and the fixed mixture was 5:5.

Then, the battery cell assembly was prepared through the following processes: coating → cold pressing → die cutting → winding → assembly → liquid injection → aging→ formation.

In this example, an air-permeable film is provided on an end cover 21 of the battery cell. The material of the air-permeable film is PTFE, the thickness of the air-permeable film is 2 mm, the area of the air-permeable film is 19.63 mm$^2$, the pore size of the air-permeable film is 0.06 um, the total air-permeable area is 0.71 mm$^2$, and the air permeability of the air-permeable film is 2 ml/day. In this example, tests showed that a pressure relief mechanism did not undergo valve opening during the total cycle time of the battery cell, and the number of cycles of the battery cell in this example could reach the required 1000 cycles.

**Example 4:**

Example 4 is shown in Table 1 below. A battery cell according to Example 4 was manufactured in the same manner as in Example 1, except that the type of sodium-containing copper-based layered oxide and the mass of copper atoms were adjusted.

**Example 5:**

Example 5 is shown in Table 1 below. A battery cell according to Example 5 was manufactured in the same manner as in Example 1, except that the type of air-permeable film was adjusted.

**Example 6:**

Example 6 is shown in Table 1 below. A battery cell according to Example 6 was manufactured in the same manner as in Example 1, except that the type of air-permeable film was adjusted.

**Comparative Example 1:**

This example provides a battery cell. No air-permeable film is provided on an outer packaging of the battery cell in this example. The battery cell includes a battery cell assembly 23. The battery cell assembly 23 includes a positive electrode plate, and the positive electrode plate is coated with a sodium-containing copper-based layered oxide as a positive electrode active substance. A chemical formula of the sodium-containing copper-based layered oxide is $Na_{0.9}Cu_{0.1}Ni_{0.25}Fe_{0.25}Mn_{0.4}O_2$, and the weight m of the coated positive electrode active substance is 1000 g.

Preparation of positive electrode slurry:

The sodium-containing copper-based layered oxide $Na_{0.9}Cu_{0.1}Ni_{0.25}Fe_{0.25}Mn_{0.4}O_2$, a binder, and a conductive carbon were mixed based on mass percentages of 94%, 2.5%, and 3.5%, and then a stirring solvent NMP was added for stirring to obtain a positive electrode slurry. A mass ratio of the added stirring solvent NMP to the fixed mixture was 4:6. The binder is PVDF.

Preparation of negative electrode slurry:

A hard carbon, a binder, a thickener, and a conductive carbon were mixed based on mass percentages of 94%, 4%, 1%, and 1%, and then a stirring solvent NMP was added for stirring to obtain a negative electrode slurry. A mass of the added stirring solvent NMP and the fixed mixture was 5:5.

Then, the battery cell assembly was prepared through the following processes: coating → cold pressing → die cutting → winding → assembly → liquid injection → aging→ formation.

No air-permeable film is provided on an end cover 21 of the battery cell according to this example. In this example, tests showed that the number of cycles required for the battery cell to reach a valve opening threshold of a pressure relief mechanism was 339 cycles.

**Comparative Example 2:**

Comparative Example 2 is shown in Table 1. In Comparative Example 2, a battery cell according to Comparative Example 2 was manufactured in the same manner as in Example 1, except that an air permeability of an air-permeable film used was adjusted.

Table 1: Related parameter results of the battery cells in Examples 1 to 6 and Comparative Examples 1 and 2

| | Type of sodium-containing copper-based layered oxide | Type of air-permeable film | Mass of Cu atoms | Maximum required gas venting volume of the battery cell per unit of total cycle time | Air permeability of air-permeable film |
|---|---|---|---|---|---|
| Example 1 | $Na_{0.9}[Cu_{0.2}Ni_{0.15}Fe_{0.25}Mn_{0.4}]O_2$ | PTFE | 115.4g | 13.3ml/day | 15ml/day |
| Example 2 | $Na_{0.9}[Cu_{0.1}Ni_{0.25}Fe_{0.25}Mn_{0.4}]O_2$ | PTFE | 57.95g | 5.7ml/day | 6ml/day |
| Example 3 | $Na_{0.9}[Cu_{0.05}Ni_{0.3}Fe_{0.25}Mn_{0.4}]O_2$ | PTFE | 29.04g | 1.9ml/day | 2ml/day |
| Example 4 | $Na_{0.9}[Cu_{0.02}Ni_{0.25}Fe_{0.25}Mn_{0.4}]O_2$ | PTFE | 18.22g | 0.5ml/day | 0.5ml/day |
| Example 5 | $Na_{0.9}[Cu_{0.2}Ni_{0.15}Fe_{0.25}Mn_{0.4}]O_2$ | UHMWPE | 115.4g | 13.3ml/day | 15ml/day |
| Example 6 | $Na_{0.9}[Cu_{0.2}Ni_{0.15}Fe_{0.25}Mn_{0.4}]O_2$ | PP | 115.4g | 13.3ml/day | 15ml/day |
| Comparative Example 1 | $Na_{0.9}[Cu_{0.1}Ni_{0.25}Fe_{0.25}Mn_{0.4}]O_2$ | PTFE | 57.95g | 5.7ml/day | / |
| Comparative Example 2 | $Na_{0.9}[Cu_{0.1}Ni_{0.25}Fe_{0.25}Mn_{0.4}]O_2$ | PTFE | 57.95g | 5.7ml/day | 2ml/day |

**Performance Testing:**

1. Cycle test procedure: Cycling at a normal pressure and 25±2 °C according to the following procedure:

(1) Charging up to 4.0 V at 0.33C cross current;

(2) Rest for 0.5 h;

(3) Discharging to 1.5 V at 0.33C cross current; and

(4) Rest for 0.5h.
Steps (1) to (4) were repeated until a capacity of the battery cell decayed to 80% of an initial capacity, to test the number of cycles of the battery cell, where C=135 Ah, which is the capacity of the battery cell. Test results are shown in Table 2 below.

2. Battery cell valve opening: By observing in real time a valve opening event of a pressure relief mechanism 21b of the battery cell within the total cycle time, whether the pressure relief structure underwent valve opening within the total cycle time of the battery cell was determined. The test results are shown in Table 2 below.
3. Test of a cycle cut-off maximum internal pressure: A pressure gauge was connected to the battery cell during fabrication, and the pressure gauge was connected to a pressure receiving sensor, to monitor the internal pressure of the battery cell. The maximum internal pressure inside the battery cell within cycle test time was recorded. The test results are shown in Table 2 below.

Table 2. Performance results of the battery cells in Examples 1 to 6 and Comparative Examples 1 and

| | Whether the pressure relief mechanism underwent valve opening during the total cycle time | Number of cycles | Cycle cut-off maximum internal pressure (MPa) |
|---|---|---|---|
| Example 1 | No | 1026 cycles | 0.254 |

(continued)

| | Whether the pressure relief mechanism underwent valve opening during the total cycle time | Number of cycles | Cycle cut-off maximum internal pressure (MPa) |
|---|---|---|---|
| Example 2 | No | 1011 cycles | 0.312 |
| Example 3 | No | 1016 cycles | 0.274 |
| Example 4 | No | 1012 cycles | 0.235 |
| Example 5 | No | 1033 cycles | 0.302 |
| Example 6 | No | 1009 cycles | 0.287 |
| Comparative Example 1 | Yes | The internal pressure reached 0.35 MPa after 339 cycles The internal pressure reached 0.45 MPa after 502 cycles, causing valve opening | 0.45 |
| Comparative Example 2 | Yes | The internal pressure reached 0.35 MPa after 529 cycles The internal pressure reached 0.46 MPa after 703 cycles, causing valve opening | 0.46 |

It can be learned from the above results that, compared with Comparative Example 1 in which no air-permeable film was provided, in Examples 1 to 6, as an air-permeable film was provided, and the air permeability of the selected air-permeable film was greater than the maximum required gas venting volume of the battery cell per unit of total cycle time, the maximum internal pressure of the battery cell did not reach the threshold of the pressure relief mechanism, valve opening of the pressure relief mechanism and failure did not occur during the cycle tests of the battery cell, and the number of cycles of the battery cell could satisfy the requirement. Therefore, the battery safety is improved. In contrast, in Comparative Example 1, valve opening and failure occurred after 502 cycles.

Compared with Comparative Example 2 in which the air permeability of the provided air-permeable film was less than the maximum gas venting volume of the battery cell, in Examples 1 to 6, as the air permeability of the selected air-permeable film was greater than the maximum required gas venting volume of the battery cell per unit of total cycle time, the maximum internal pressure of the battery cell did not reach the threshold of the pressure relief mechanism, valve opening of the pressure relief mechanism and failure did not occur during the cycle tests of the battery cell, and the number of cycles of the battery cell could satisfy the requirement. However, in Comparative Example 2, the number of cycles required to reach the valve opening threshold of the pressure relief mechanism was 529 cycles, and valve opening and failure occurred after 703 cycles.

Finally, it should be noted that the above embodiments are only used to illustrate the technical solutions of the present application, rather than limit the same. Although the present application has been described in detail with reference to the above embodiments, those of ordinary skill in the art should understand that modifications can still be made to the technical solutions recorded in the above embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

**Claims**

1.   A battery cell, wherein the battery cell comprises:

a battery cell assembly, wherein the battery cell assembly comprises a positive electrode plate, an active material coating is provided on the positive electrode plate, and the active material coating comprises a sodium-containing copper-based layered oxide;

an outer packaging, wherein the outer packaging is configured to encapsulate the battery cell assembly, an air-permeable member is provided on the outer packaging, an air permeability of the air-permeable member is equal to or greater than a maximum required gas venting volume of the battery cell per unit of total cycle time, and the maximum required gas venting volume of the battery cell per unit of total cycle time is obtained by conversion based on a volume of carbon dioxide generated due to oxygen release caused by Cu-O bond breakage in the sodium-containing copper-based layered oxide.

2.  The battery cell according to claim 1, wherein the maximum required gas venting volume of the battery cell per unit of total cycle time and the volume of carbon dioxide generated due to oxygen release caused by Cu-O bond breakage in the sodium-containing copper-based layered oxide satisfy the following formula: the maximum required gas venting volume of the battery cell per unit of total cycle $\mathrm{time} = \dfrac{\frac{V_{CO2}}{a} - \frac{P_{max}}{1\,atm} \times V_{residual}}{T}$, wherein VCO2 is the volume of carbon dioxide generated in the battery cell within the total cycle time due to oxygen release caused by Cu-O bond breakage in the sodium-containing copper-based layered oxide, a is a proportion coefficient, in all gases, of the carbon dioxide generated due to oxygen release caused by Cu-O bond breakage in the sodium-containing copper-based layered oxide, a is 0.45 to 0.72, Pmax is a maximum acceptable internal pressure threshold of the battery cell, Vresidual is a residual volume of the battery cell, and T is the total cycle time of the battery cell.

3.  The battery cell according to claim 2, wherein the volume of carbon dioxide generated due to oxygen release caused by Cu-O bond breakage in the sodium-containing copper-based layered oxide satisfies the following formula: $V_{CO2} = \dfrac{b \times m_{Cu} \times M_O \times M_{CO2}}{M_{Cu} \times M_{O2} \times \rho_{CO2}}$, wherein b is 0.05 to 0.1, $m_{Cu}$ is a mass of a copper atom in the sodium-containing copper-based layered oxide, $M_O$ is a molar mass of an oxygen atom, $M_{CO2}$ is a molar mass of the carbon dioxide, $M_{Cu}$ is a molar mass of the copper atom, $M_{O2}$ is a molar mass of the oxygen, and $\rho_{Co2}$ is a density of the carbon dioxide.

4.  The battery cell according to any one of claims 1 to 3, wherein a chemical formula of the sodium-containing copper-based layered oxide is $Na_q M_x Cu_y O_2$, wherein M comprises two or more elements selected from Ti, V, Cr, Mn, Fe, Co, Ni, or Zn, $0.81 \leq q \leq 1$, $0.8 < x+y \leq 1$, and $0.03 \leq y \leq 0.2$.

5.  The battery cell according to claim 4, wherein M comprises Ni, Mn, and Fe, $0.81 \leq q \leq 1$, $0.8 < x+y \leq 1$, and $0.05 \leq y \leq 0.2$.

6.  The battery cell according to any one of claims 1 to 5, wherein the air-permeable member comprises an air-permeable film, the outer packaging comprises an end cover, and the air-permeable film is provided on the end cover.

7.  The battery cell according to claim 6, wherein a material of the air-permeable film comprises at least one of polytetrafluoroethylene, polyethylene, or polypropylene.

8.  The battery cell according to claim 6, wherein a pore size of the air-permeable film is 0.001 um to 0.5 um.

9.  A manufacturing method for a battery cell, comprising the following steps:

    obtaining a maximum required gas venting volume of the battery cell per unit of total cycle time, wherein the maximum required gas venting volume of the battery cell per unit of total cycle time is obtained by conversion based on a volume of carbon dioxide generated due to oxygen release caused by Cu-O bond breakage in a sodium-containing copper-based layered oxide;
    selecting an air-permeable member with an air permeability equal to or greater than the maximum required gas venting volume of the battery cell per unit of total cycle time; and
    mounting the air-permeable member onto an outer packaging of the battery cell.

10. The manufacturing method according to claim 9, wherein the step of obtaining the maximum required gas venting volume of the battery cell per unit of total cycle time, wherein the maximum required gas venting volume of the battery cell per unit of total cycle time is obtained by conversion based on the volume of carbon dioxide generated due to oxygen release caused by Cu-O bond breakage in the sodium-containing copper-based layered oxide, further comprises: obtaining the maximum required gas venting volume of the battery cell based on the following formula:

    the maximum required gas venting volume of the battery cell per unit of total cycle $\mathrm{time} = \dfrac{\frac{V_{CO2}}{a} - \frac{P_{max}}{1\,atm} \times V_{residual}}{T}$,

wherein $V_{CO2}$ is the volume of carbon dioxide generated in the battery cell within the total cycle time due to oxygen release caused by Cu-O bond breakage in the sodium-containing copper-based layered oxide, a is a proportion coefficient, in all gases, of the carbon dioxide generated due to oxygen release caused by Cu-O bond breakage in the sodium-containing copper-based layered oxide, a is 0.45 to 0.72, $P_{max}$ is a maximum acceptable internal pressure threshold of the battery cell, $V_{residual}$ is a residual volume of the battery cell, and T is the total cycle time of the battery cell.

11. The manufacturing method according to claim 10, further comprising: obtaining a volume of carbon dioxide generated due to oxygen release caused by Cu-O bond breakage in a sodium-containing copper-based layered oxide based on the following formula:

$$V_{CO2} = \frac{b \times m_{Cu} \times M_O \times M_{CO2}}{M_{Cu} \times M_{O2} \times \rho_{CO2}}$$ , wherein b is 0.05 to 0.1, $m_{Cu}$ is a mass of a copper atom in the sodium-containing copper-based layered oxide, $M_o$ is a molar mass of an oxygen atom, $M_{Co2}$ is a molar mass of the carbon dioxide, $M_{Cu}$ is a molar mass of the copper atom, $M_{O2}$ is a molar mass of the oxygen, and $\rho_{Co2}$ is a density of the carbon dioxide.

12. A battery, wherein the battery comprises the battery cell according to any one of claims 1 to 8.

13. An electric device, wherein the electric device comprises the battery according to claim 12.

FIG. 1

FIG. 2

FIG. 3

## INTERNATIONAL SEARCH REPORT

| International application No. |
| --- |
| **PCT/CN2024/090905** |

| A. | CLASSIFICATION OF SUBJECT MATTER |
| --- | --- |

H01M50/107(2021.01)i

According to International Patent Classification (IPC) or to both national classification and IPC

| B. | FIELDS SEARCHED |
| --- | --- |

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

VEN, CNTXT, USTXT, DWPI, CNKI, IEEE: 电池, 钠, 铜基, 层状氧化物, 透气, 排气, 键, 断裂, batteries, sodium, copper-based, layered, oxide, breathable, exhaust, bond, fracture

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 109786715 A (CENTRAL SOUTH UNIVERSITY) 21 May 2019 (2019-05-21) description, paragraphs 21-22 | 1-12 |
| A | CN 116835670 A (TRINA ENERGY STORAGE SOLUTIONS (JIANGSU) CO., LTD.) 03 October 2023 (2023-10-03) entire document | 1-12 |
| A | CN 104617288 A (INSTITUTE OF PHYSICS, CHINESE ACADEMY OF SCIENCES) 13 May 2015 (2015-05-13) entire document | 1-12 |
| A | US 2018283251 A1 (TOYOTA MOTOR ENGINEERING & MANUFACTURING NORTH AMERICA, INC.) 04 October 2018 (2018-10-04) entire document | 1-12 |
| A | US 2021371297 A1 (ILIKA TECHNOLOGIES LIMITED) 02 December 2021 (2021-12-02) entire document | 1-12 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **12 June 2024** | **27 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 109786715 | A | 21 May 2019 | None | | | |
| CN | 116835670 | A | 03 October 2023 | None | | | |
| CN | 104617288 | A | 13 May 2015 | None | | | |
| US | 2018283251 | A1 | 04 October 2018 | None | | | |
| US | 2021371297 | A1 | 02 December 2021 | WO | 2019193324 | A1 | 10 October 2019 |
| | | | | JP | 2021520331 | A | 19 August 2021 |
| | | | | EP | 3776700 | A1 | 17 February 2021 |
| | | | | KR | 20200138808 | A | 10 December 2020 |
| | | | | JP | 2024023209 | A | 21 February 2024 |
| | | | | GB | 2572610 | A | 09 October 2019 |
| | | | | CN | 112204774 | A | 08 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311421246